**Europäisches Patentamt**

**European Patent Office**

**Office européen des brevets**

(19)

(11) **EP 1 106 455 A2**

(12) **EUROPÄISCHE PATENTANMELDUNG**

(43) Veröffentlichungstag:
**13.06.2001 Patentblatt 2001/24**

(51) Int Cl.⁷: **B60S 1/38**

(21) Anmeldenummer: **00124670.1**

(22) Anmeldetag: **10.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.12.1999 DE 19959259**

(71) Anmelder: **Volkswagen Aktiengesellschaft
38436 Wolfsburg (DE)**

(72) Erfinder: **Ortiz, Sergio
38102 Braunschweig (DE)**

(74) Vertreter: **Rabe, Andreas et al
Reitstötter, Kinzebach & Partner,
Postfach 86 06 49
81633 München (DE)**

(54) **Wischblatt zum Reinigen von Scheiben an Kraftfahrzeugen**

(57) Die Erfindung betrifft ein Wischblatt zum Reinigen von Scheiben an Kraftfahrzeugen mit einer an der Scheibe anlegbaren, langgestreckten, gummielastischen Wischleiste (3), einer Federschiene (1) und einer Windabweisleiste (2), wobei das Wischblatt an einem Wischerarm befestigbar ist, wobei die Federschiene (1) sich im wesentlichen über die gesamte Breite des Querschnittes des Wischblattes erstreckt, die Wischleiste (3) auf der der Scheibe zugewandten Seite der Federschiene (1) befestigbar ist und auf der der Scheibe abgewandten Seite der Federschiene (1) die Windabweisleiste (2) befestigbar ist.

FIG. 1

**Beschreibung**

Die Erfindung betrifft ein Wischblatt zum Reinigen von Scheiben an Kraftfahrzeugen mit einer an der Scheibe anlegbaren, langgestreckten gummielastischen Wischleiste, einer Federschiene und einer Windabweisleiste, wobei das Wischblatt, an einem Wischerarm befestigbar ist.

Wischblätter der Eingangs genannten Art sind beispielsweise aus der deutschen Patentanmeldung DE 197 39 256.3 bekannt. Bei dem dortigen Wischblatt sind 2 Federschienen vorgesehen, die in jeweils einander gegenüberliegenden Längsnuten an den Längsseiten der Wischleiste angeordnet sind. Die Federschienen werden durch eine im Mittelabschnitt des Wischblattes vorgesehene Abschlußvorrichtung beziehungsweise an den Endabschnitten vorgesehene klammerartige Haltemittel zusammengehalten.

Nachteilig ist bei diesem Wischblatt jedoch, daß zwei Federschienen an dem Wischblatt gehalten werden müssen. Ferner ist die erreichbare Vorspannung durch die Federschiene begrenzt, da die Federschienen durch die Längsnuten in ihren Abmaßen nicht beliebig gewählt werden können.

Die Steifigkeit der Federschiene wird durch das Produkt aus Flächenträgheitsmoment und Elastizitätsmodul bestimmt. Das Flächenträgheitsmoment eines Rechteckprofils errechnet sich aus der Formel $I = \frac{bh^3}{12}$ woraus ersichtlich wird, daß die Breite und vor allem die Höhe des Profils entscheidenden Einfluß auf das Flächenträgheitsmoment haben.

Aufgabe der Erfindung ist es daher den Aufbau eines derartigen Wischblattes zu vereinfachen.

Erfindungsgemäß wird vorgeschlagen, daß sich die Federschiene im wesentlichen über die gesamte Breite des Querschnittes des Wischblattes erstreckt und die Wischleiste auf der der Scheibe zugewandten Seite der Federschiene befestigbar ist, und auf der der Scheibe abgewandten Seite der Federschiene die Windabweisleiste befestigbar ist. Vorteilhafterweise ist die Federschiene zumindest abschnittsweise breiter als die Wischleiste.

Durch die Anordnung der Federschiene zwischen der Wischleiste und der Windabweisleiste ist es ermöglicht, diese beliebig groß zu wählen, ohne daß dazu die Windabweisleiste oder Wischleiste geändert werden müssen. Federschiene, Wischleiste und Windabweisleiste können als Meterware hergestellt werden und dann je nach Bedarf auf eine gewünschte Länge zurechtgeschnitten werden.

Weiterhin wird es ermöglicht durch eine gezielte Wahl der Abmaße der Federschiene, ein gewünschtes Flächenträgheitsmoment einzustellen, und damit die gewünschten Federeigenschaften zu erreichen. Durch eine Vorspannung der Federschiene wird dann eine gleichmäßig gute Anpresskraft auf die Fahrzeugscheibe realisiert. Die Vorspannung besteht in einer überkrümmten Vorverformung der Federschiene.

Das Wischblatt kann vorzugsweise durch Coextrusion hergestellt sein, daß heißt die Federschiene wird beim Extrudieren der Wischleiste und Windabweisleiste in den Extruder mit eingeführt, so daß nach dem Extrusionsvorgang die Wischleiste als auch die Windabweisleiste an der Federschiene haften.

Eine weitere vorteilhafte Möglichkeit der Befestigung der Wischleiste und Windabweisleiste kann zum Beispiel durch Kleben oder durch Formschluß wie z. B. Klammern erreicht werden.

Weiter wird vorgeschlagen ein Befestigungsteil vorzusehen, das mit der Federschiene verbunden ist und über das der Wischerarm auf einfache Art und Weise befestigt werden kann.

Die Federschiene überragt dazu vorzugsweise das Wischblatt seitlich, so daß hier entsprechende Befestigungsansätze geschaffen sind.

Ein weiterer Vorteil in der Verwendung einer sich über dem gesamten Querschnitt des Wischblattes erstreckenden Federschiene liegt darin, daß eine besonders große Befestigungsfläche an der Federschiene für die Wischleiste als auch die Windabweisleiste gegeben ist. Diese Befestigungsfläche kann dann durch eine entsprechende Klebe- oder Klemmvorrichtung genutzt werden.

Das Kippen der Wischleiste in die Schlepplage im Umkehrpunkt des Wischvorganges wird durch einen entsprechenden Steg in der Wischleiste erreicht. Die Erfindung wird nachfolgend anhand eines bevorzugten Ausführungsbeispieles näher erläutert. Die Figuren zeigen:

Figur 1:     Querschnitt durch ein Wischblatt

Figur 2:     Querschnitt durch ein Wischblatt mit daran angeordneten Befestigungsteil und Wischerarm

Figur 3:     Wischblatt mit Halteklammern

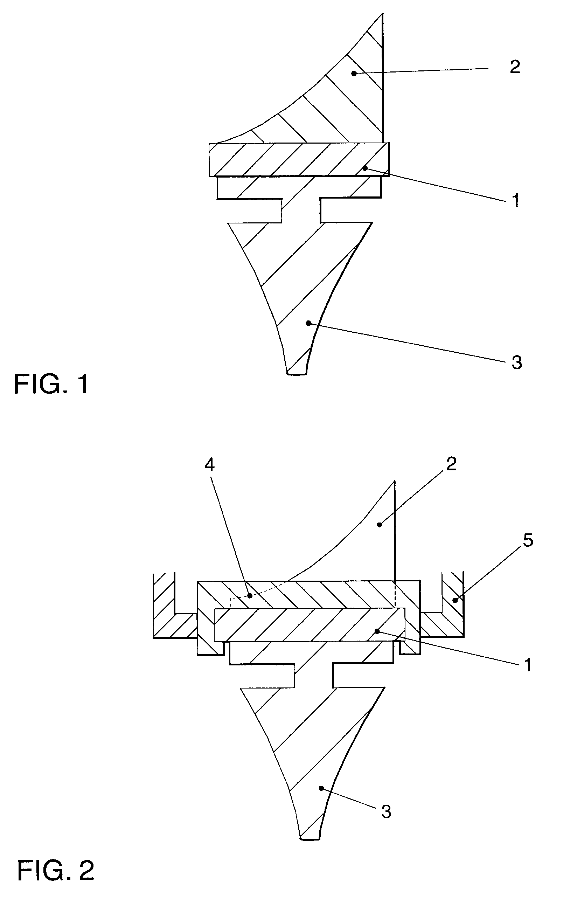

In Figur 1 ist ein Wischblatt zu erkennen, welches entsprechend dem erfindungsgemäßen Aufbau eine Federschiene 1 eine auf der der Scheibe zugewandten Seite der Federschiene 1 angeordneten Wischleiste 3 und eine auf der der Scheibe abgewandten Seite der Federschiene 1 angeordneten Windabweisleiste 2 aufweist. Die Windabweisleiste 2 hat einen aerodynamisch geformten Querschnitt und erstreckt sich vorzugsweise über die gesamte Länge des Wischblattes. Durch die entsprechende Ausformung der Windabweisleiste 2 wird während des Fahrens der gewünschte Anpressdruck auf die Scheibe erreicht.

Die Federschiene 1 erstreckt sich nahezu über die gesamte Breite des Querschnittes des Wischblattes. Gemäß einer weiteren Ausbildung erstreckt sich die Federschiene 1 zumindest über die gesamte Breite des Querschnitts des Wischblattes. Ferner ist die Federschiene 1 zumindest abschnittsweise breiter als die Wischleiste 3, insbesondere im Bereich des Kopfteils der Wischleiste 3, der an der Federschiene 1 befestigt ist.

Der Anpressdruck auf die Scheibe kann durch eine Vorspannung der Federschiene 1 unterstützt werden. Die Federschiene 1 wird gegenüber der Krümmung der Scheibe überkrümmt. Liegt das Wischblatt vollständig auf der Scheibe auf wird dadurch in der zum Fahrzeug gerichteten Seite der Federschiene 1 eine Zugspannung und in der äußeren Seite der Federschiene 1 eine Druckspannung erzeugt.

Die Wischleiste 3 und/oder die Windabweisleiste 2 sind auf jeweils gegenüberliegenden Seiten der Federschiene 1 angeordnet. Die Befestigung kann beispielsweise durch Kleben, Halteklammem oder durch Coextrusion des Wischblattes erfolgen. Während des Coextrusionsvorganges wird die Federschiene 1 in den Extruder mit eingeführt, so daß während des Extrudierens der Wischleiste 3 und der Windabweisleiste 2 der gummielastische Kunststoff haftend auf die Federschiene 1 aufgebracht wird.

In Figur 2 ist ein Wischblatt mit einem Befestigungsteil 4 und einem Wischerarm 5 zu erkennen. Das Befestigungsteil 4 umgreift klammerartig die Federschiene 1 und dient der Befestigung des Wischerarmes 5. Die Windabweisleiste 2 ist dazu an dieser Stelle in vorteilhafterweise unterbrochen. Das Befestigungsteil 4 ist zweiteilig aufgebaut und wird erst bei der Montage an der Federschiene 1 zusammengefügt. Beide Teile des Befestigungsteils 4 weisen eine Bohrung auf die bei der Befestigung gegenüberliegend angeordnet sind, so daß sich nach der Befestigung eine Durchgangsbohrung ergibt, in der der Wischerarm befestigt wird. Das Befestigungsteil 4 selbst ist z. B. ein einstückig gefräster Aluminiumkörper.

Durch die den erfindungsgemäßen Aufbau des Wischblattes können sämtliche zusätzliche Halteklammem an den Enden des Wischblattes entfallen.

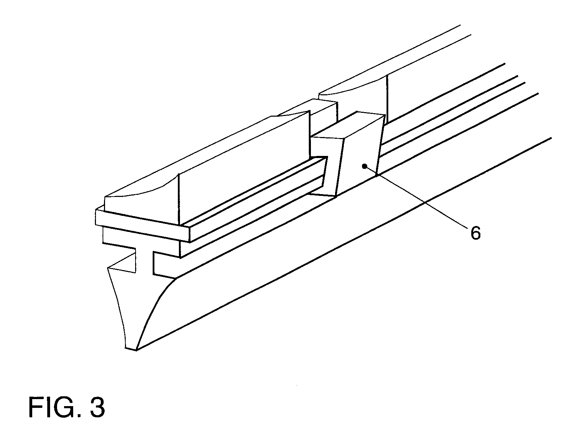

In Figur 3 ist ein erfindungsgemäßes Wischblatt mit einer Wischleiste 3, einer Federschiene 1 und einer Windabweisleiste 2 zu erkennen. Die drei Teile werden mittels einer oder mehrerer Klammern 6 zusammengehalten. Die Windabweisleiste ist dazu an den Befestigungsstellen der Klammer 6 unterbrochen. Die Anzahl der Klammern kann beliebig gewählt werden.

Die Klammem 6 und das Befestigungsteil 4 können mittels einer nicht dargestellten Nase, die in eine Nut der Federschiene 1 eingreift, in Längsrichtung der Federschiene 1 gesichert sein. Denkbar wäre auch die Nut derart zu dimensionieren, daß die gesamte Klammer 6 bzw. Befestigungsteil 4 in der Nut aufgenommen werden. Die Nase kann damit entfallen.

Die Federschiene 1 besteht aus einem nichtrostenden Werkstoff oder wird mit einem derartigen Werkstoff überzogen. Die Oberflächenbehandlung bzw. die Wahl eines nichtrostenden Werkstoffes kann entfallen, wenn die Federschiene von der Wischleiste 3 und/oder der Windabweisleiste feuchtigkeitsdicht umschlossen ist. In der Wischleiste 3 bzw. Windabweisleiste 2 ist dann ein die Federschiene aufnehmender Kanal vorgesehen der an seinen Enden verschlossen ist. Das Verschließen kann durch Klammem, Verkleben oder Verschweißen des Gummimaterials erfolgen.

**Patentansprüche**

1. Wischblatt zum Reinigen von Scheiben an Kraftfahrzeugen mit einer an der Scheibe anlegbaren, langgestreckten, gummielastischen Wischleiste (3), einer Federschiene (1) und einer Windabweisleiste (2), wobei das Wischblatt an einem Wischerarm befestigbar ist,
   **dadurch gekennzeichnet**, daß die Federschiene (1) sich im wesentlichen über die gesamte Breite des Querschnittes des Wischblattes erstreckt, die Wischleiste (3) auf der der Scheibe zugewandten Seite der Federschiene (1) befestigbar ist und auf der der Scheibe abgewandten Seite der Federschiene (1) die Windabweisleiste (2) befestigbar ist.

2. Wischblatt nach Anspruch 1,
   **dadurch gekennzeichnet**, daß die Federschiene (1) zumindest abschnittsweise breiter ist als die Wischleiste (3).

3. Wischblatt nach Anspruch 1 oder 2,
   **dadurch gekennzeichnet**, daß das Wischblatt durch Coextrusion hergestellt ist.

4. Wischblatt nach Anspruch 1 oder 2,
   **dadurch gekennzeichnet**, daß die Wischleiste (3) und/oder Windabweisleiste (2) an der Federschiene (1) festgeklebt sind.

5. Wischblatt nach Anspruch 1 oder 2,
   **dadurch gekennzeichnet**, daß die Wischleiste (3) und/oder Windabweisleiste (2) durch Klammern (6) an der Federschiene (1) gehalten sind.

6. Wischblatt nach einem der Ansprüche 1 bis 5,
   **dadurch gekennzeichnet**, daß ein Befestigungsteil (4) vorgesehen ist und das Wischblatt (3) mit dem Befestigungsteil (4) über die Federschiene (1) an dem Wischerarm (5) befestigt ist.

7. Wischblatt nach Anspruch 5 oder 6, **dadurch gekennzeichnet**, daß an der Federschiene (1) eine Nut vorgesehen ist und das Befestigungsteil (4) und/oder die Klammem (6) durch die Nut längsverschieblich gesichert sind.

FIG. 1

FIG. 2

FIG. 3